# EUROPEAN PATENT APPLICATION

(11) **EP 3 611 776 A1**
(43) Date of publication of application: **19.02.2020**
(21) Application number: 18207748.7
(22) Date of filing: 22.11.2018
(51) Int. Cl.: H01M 2/10, H01M 10/625, H01M 10/6554, H01M 10/613

(54) **BATTERY MODULE**

(30) Priority: 17.08.2018 KR 20180096229
(71) Applicant: Hyundai Motor Company, Seoul 06797 (KR); Kia Motors Corporation, Seoul 06797 (KR)
(72) Inventor: LIM, Hae Kyu, 14574 Bucheon-si, Gyeonggi-do (KR); KIM, Tae Hyuck, 31156 Cheonan-si, Chungcheongnam-do (KR); CHOI, Yong Hwan, 16930 Yongin-si, Gyeonggi-do (KR); KIM, Yong Jae, 16317 Suwon-si, Gyeonggi-do (KR); CHOI, Jae Hoon, 15821 Gunpo-si, Gyeonggi-do (KR); LEE, Yong Jin, 18591 Hwaseong-si, Gyeonggi-do (KR)
(74) Representative: Viering, Jentschura & Partner mbB Patent- und Rechtsanwälte

(57) **Abstract**

A battery module for a vehicle is provided. The battery module includes a cell assembly that has a plurality of battery cells stacked on top of each other in one direction. A cooling channel integrated plate is positioned to face the cell assembly in a direction that is perpendicular to the direction in which the battery cells are stacked. The cooling channel integrated plate includes a cooling passage formed therein and cooling water flows through the cooling passage. A thermally conductive adhesive layer adheres the cell assembly and the cooling channel integrated plate to each other.

## Description

### BACKGROUND

### Field of the Invention

The present invention relates generally to a battery module and, more particularly, to a battery module that does not require a separate cooling channel outside the battery module by embedding a cooling passage through which cooling water flows in an outer plate of the battery module.

### Description of the Related Art

Problems of global warming and environmental pollution caused by the use of fossil fuels have led to active research and development of environmentally friendly vehicles to maximally reduce emissions of pollution in the automotive industry, and the market of such vehicles is gradually expanding. Examples of environmentally friendly vehicles include an electric vehicle, a hybrid vehicle, and a plug-in hybrid vehicle using electric motors that generate a driving force by using electric energy instead of internal combustion engines that generate a driving force by combusting fossil fuels. Of these environmentally friendly vehicles using electric energy, in an electric vehicle and a plug-in hybrid vehicle, electricity is supplied from an external charging facility connected to the grid to charge a battery within a vehicle, and electricity charged and stored in the battery is used to produce kinetic energy to move the vehicle.

The battery used in such environmentally friendly vehicles is required to have a high output and thus generates a substantial amount of heat. Thus, to improve performance and lifespan of the battery, it is important to ensure that the heat generated in the battery is effectively discharged externally to thus prevent the battery from overheating. A battery to be applied to a vehicle is typically manufactured by stacking multiple battery cells to form a single module. To discharge heat of the battery of such a module structure (hereinafter, also referred to as "battery module"), the related art has employed a battery module cooling structure in which a separate cooling channel through which cooling water flows is provided on the outside of the battery module while heat dissipation fins are disposed between the respective battery cells inside the battery module to disposed the heat dissipation fins in contact with the cooling channel outside the battery module.

Such a battery module cooling structure in the related art requires the separate cooling channel which increases the number of components and the number of assembly steps, leading to an increase in costs or an increase in overall size of a battery system. Additionally, heat transfer in the battery module cooling structure in the related art is performed only through the heat dissipation fins, leading to a decrease in cooling efficiency. Moreover, the battery module cooling structure in the related art has limited application to a battery structure in which there is substantial heat generation due to an increase in battery capacity due to high performance vehicle development.

The foregoing is intended merely to aid in the understanding of the background of the present invention, and is not intended to mean that the present invention falls within the purview of the related art that is already known to those skilled in the art.

### SUMMARY

Accordingly, the present invention provides a battery module capable of improving cooling performance thereof while reducing the number and size of components of a battery system.

According to one aspect of the present invention, a battery module may include: a cell assembly having a plurality of battery cells stacked on top of each other in one direction; a cooling channel integrated plate positioned to face the cell assembly in a direction perpendicular to the direction in which the battery cells are stacked, the cooling channel integrated plate having a cooling passage formed therein and through which cooling water may flow; and a thermally conductive adhesive layer allowing the cell assembly and the cooling channel integrated plate to adhere to each other.

In an exemplary embodiment of the present invention, the cooling channel integrated plate may be made of a metal material and may have a single structure in which no empty space or gap is present except for a region where the cooling passage is formed. In addition, the cooling channel integrated plate may be manufactured by casting in which a metal pipe filled with filler is disposed at a predetermined position in a mold, and a metal of the same material as the metal pipe is used in a state where the metal pipe is placed in the mold.

The battery module may further include a plurality of heat dissipation fins arranged between the plurality of battery cells and each having a first portion in surface contact with adjacent battery cells and a second portion disposed at each end of the first portion, second portion in surface contact with the cooling channel integrated plate. The cooling channel integrated plate may include: protrusions extending from a surface of the cooling channel integrated plate to be arranged between the second portions of the multiple heat dissipation fins, the surface being in contact with the second portions of the multiple heat dissipation fins.

In addition, the battery module may further include end plates positioned on outer surfaces of the outermost battery cells of the cell assembly, respectively, and applying a surface pressure to an interior of the cell assembly, the end plates being joined to the cooling channel integrated plate. The thermally conductive adhesive layer may be in direct contact with ends of the multiple battery cells and with the cooling channel integrated plate.

According to the battery module, the cooling passage through which cooling water flows may be disposed in the upper and/or lower plates of the battery module. Accordingly, a separate cooling channel outside the module may be omitted. Thus, it may be possible to significantly reduce the number and size of components required to realize the battery system. Additionally, according to the battery module, the ends of the battery cells in the battery module and the upper and/or lower plates provided with the cooling passage are in mutual heat exchange relationship through the thermally conductive adhesive layer. Thus, the present invention may provide advantages over a conventional system in which indirect cooling is performed only by the heat dissipation fins in that a heat transfer passage is short and a heat exchangeable area is wide, resulting in a significant improvement of the cooling efficiency.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a perspective view showing a battery module according to an exemplary embodiment of the present invention;
FIG. 2 is a detailed perspective view showing the battery module according to the exemplary embodiment of the present invention;
FIG. 3 is a cross-sectional view showing the battery module according to the exemplary embodiment of the present invention;
FIG. 4 is an enlarged view showing a portion of the cross-sectional view shown in FIG. 3 according to the exemplary embodiment of the present invention;
FIG. 5 is a cross-sectional view showing a battery module according to another exemplary embodiment of the present invention;
FIG. 6 is an enlarged view showing a portion of the cross-sectional view shown in FIG. 5 according to the exemplary embodiment of the present invention; and
FIGS. 7 and 8 are views showing examples of a cooling passage formed in a cooling channel integrated plate of the battery module according to various exemplary embodiments of the present invention.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Hereinbelow, exemplary embodiments of a battery module according to the present invention will be described in detail with reference to the accompanying drawings. Throughout the drawings, the same reference numerals will refer to the same or like parts.

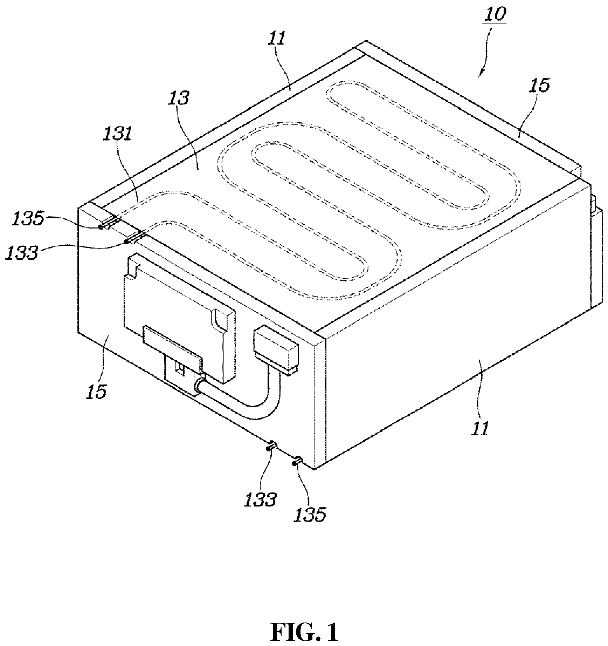

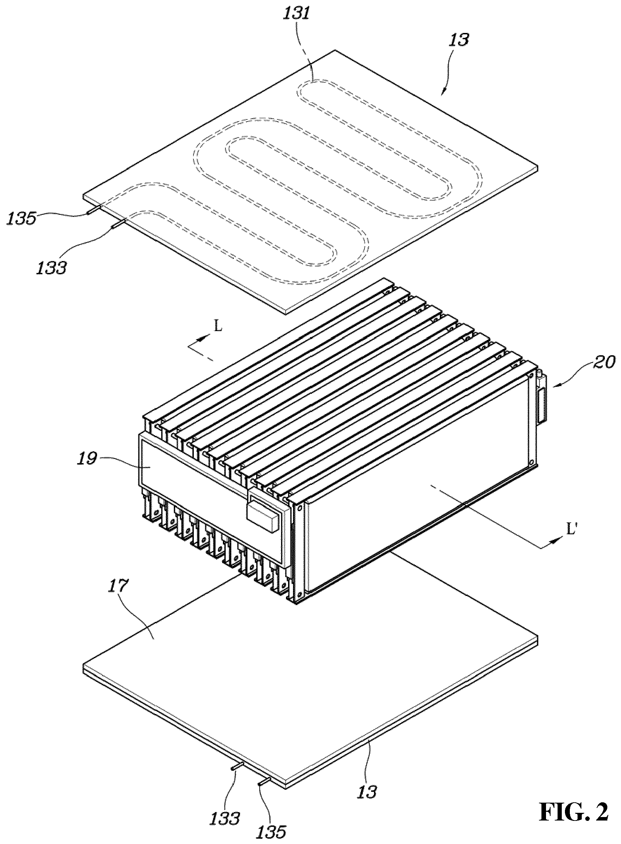

FIG. 1 is a perspective view showing a battery module according to an exemplary embodiment of the present invention, and FIG. 2 is a detailed perspective view showing the battery module according to the exemplary embodiment of the present invention.

Referring to FIGS. 1 and 2, a battery module 10 according to an exemplary embodiment of the present invention may include a cell assembly 20 having a plurality of battery cells 21 stacked on top of each other, a cooling channel integrated plate 13 positioned on either of upper and lower portions of the cell assembly 20 and having a cooling passage 131 formed therein and through which cooling water may flow, and a thermally conductive adhesive layer 17 interposed between the cell assembly 20 and the cooling channel integrated plate 13 and the cell assembly and the cooling channel integrated plate may thus adhere to each other.

The cell assembly 20 may include the plurality of battery cells 21 stacked on top of each other in one direction and electrically connected to each other. Each of the battery cells 21 may form a unit for storing a predetermined amount of electric energy. The plurality of battery cells 21 have an electrical connection relationship, and the connection relationship may be established by selectively applying a serial or parallel connection structure as required. The voltage and the capacity of the battery module may be determined by the number of the battery cells 12 and by mutual connection relationship between the respective cells. A voltage sensing circuit 19 configured to detect the voltage of each of the battery cells 21 may be positioned on a side of the cell assembly 20, that is, on a side surface thereof which is perpendicular to a direction in which the battery cells 21 are stacked in FIG. 2. Voltage information regarding each of the battery cell 21 detected by the voltage sensing circuit 19 may be transmitted to a controller or the like configured to manage a battery.

The cooling channel integrated plate 13 may be formed as a single plate-like structure in which the cooling passage 131 is formed therein to allow cooling water to flow through the cooling passage. The cooling channel integrated plate 13 may cover and protect the upper and lower portions of the cell assembly 20 in the battery module 10 having a hexahedral shape. The cooling channel integrated plate 13 may also operate as a cooling channel that cools the battery cells 21 by using cooling water flowing through the cooling passage 131 formed therein. The cooling channel integrated plate 13 may be positioned to face the cell assembly 20 in a direction perpendicular to the direction in which the battery cells 21 are stacked. In FIG. 2, the cooling channel integrated plate 13 may be positioned on both the upper and lower portions of the cell assembly 20. However, the cooling channel integrated plate 13 may be positioned on at least one of the upper and lower portions of the cell assembly.

Further, the cooling channel integrated plate 13 may be formed from a metal material (e.g., aluminum and the like) that facilitates heat transfer to improve cooling performance. The cooling passage 131 formed in the cooling channel integrated plate 13 may employ a multiple flow passage structure to improve cooling efficiency. There is a need for a method of processing the cooling passage 131 of various structures in the metal cooling channel integrated plate 13 having a single structure, that is, having a structure in which no empty space is present except for a region where the cooling passage 131 is formed.

In the exemplary embodiment of the present invention, the cooling channel integrated plate 13 may be manufactured by casting in which a metal pipe filled with filler is disposed at a predetermined position in a mold, and a metal of the same material as the metal pipe is used when the metal pipe is disposed in the mold. In particular, the exemplary embodiment of the present invention may employ a combi-core technique. The combi-core technique is a technique of filling the filler in the metal pipe, processing the filler to form a desired structure, and then removing the filler. In addition, a pipe made of the same material (e.g., aluminum) as a material for the cooling channel integrated plate 13 is provided, and the inside of the pipe may be filled with filler such as salt, and then the pipe may be extended to increase in length while decreasing in diameter through processes such as drawing and extrusion.

Thereafter, the extended pipe may be shaped to have a desired cooling passage structure, and the shaped pipe may be inserted into a mold, and then the cooling channel integrated plate may be cast using a metal of the same material as the pipe to thus manufacture the cooling channel integrated plate 13. Thereafter, the filler in the pipe may be removed by a water jet method or the like, resulting in the cooling channel integrated plate 13 having the desired cooling passage structure. In particular, when the material of the pipe provided to form the cooling passage 131 is determined to be the same as the material of the cooling channel integrated plate 13, formation of an interface may be prevented therebetween which results in excellent heat transfer efficiency.

The thermally conductive adhesive layer 17 allows the cell assembly 20 and the cooling channel integrated plate 13 to adhere to each other and allows heat of the cell assembly 20 to be efficiently transferred to the cooling channel integrated plate 13. The thermally conductive adhesive layer 17 may be formed by curing an adhesive having thermal conductivity. Additionally, the thermally conductive adhesive layer 17 may have electrical insulating properties to prevent an accident caused by an electrical short circuit. In particular, the thermally conductive adhesive layer 17 may have one surface thereof (e.g., a first surface) in direct contact with the battery cell 21 and the other surface (e.g., a second surface) in direct contact with the cooling channel integrated plate 13.

The battery module 10 according to the exemplary embodiment of the present invention may further include end plates 11 positioned on outer surfaces of the outermost battery cells of the cell assembly 20, respectively, and applying a surface pressure to the interior of the cell assembly 20. The end plates 11 may provide an appropriate surface pressure to the stacked battery cells and to thus suppress cell swelling that may occur when the battery module is charged. The end plates 11 may be disposed on the front and rear of the battery module 10, that is, the end plates 11 may be stacked on the battery cells 21 such that the end plates and the cells are arranged side by side in a row. The end plates 11 may be firmly assembled to provide the appropriate surface pressure and thus may be joined to the cooling channel integrated plates 13 disposed on the upper and lower portions of the cell assembly by laser welding or the like.

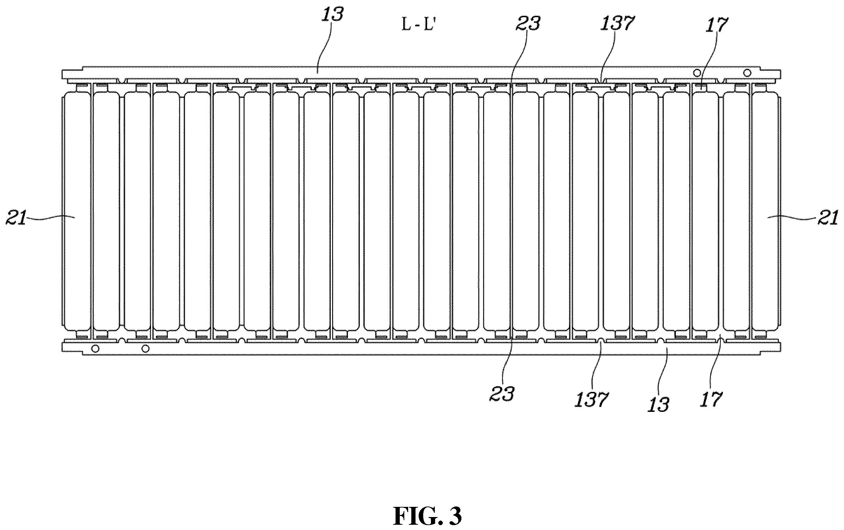

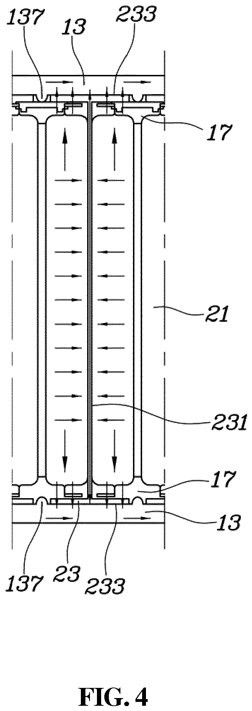

FIG. 3 is a cross-sectional view showing the battery module according to the exemplary embodiment of the present invention taken along line L-L' of FIG. 2, and FIG. 4 is an enlarged view showing a portion of the cross-sectional view shown in FIG. 3. FIGS. 3 and 4 show an exemplary embodiment in which multiple heat dissipation fins 23 may be disposed between the stacked multiple battery cells 21 to be arranged at predetermined intervals. Each of the heat dissipation fins 23 may include a first portion 231 in direct contact with adjacent battery cells 21 of the battery cells 21 and a second portion 231 that extends perpendicularly from each end of the first portion 231, the second portion being in direct contact with the cooling channel integrated plate 13. As shown in FIGS. 3 and 4, the heat dissipation fin 23 may have an "I" cross-sectional shape.

As shown in FIG. 4, in the exemplary embodiment including the heat dissipation fins 23, the first portions 231 and the second portions 233 of the heat dissipation fins 23 may cause heat of central portions of the battery cells 21 to be transferred to the cooling channel integrated plates 13 disposed on upper and lower portions of the cells. In a cooling structure shown in FIGS. 3 and 4, the cooling channel integrated plate 13 may have protrusions 137 formed on a surface thereof facing the battery cells 21 to be arranged between portions that are in contact with the second portions 233 of the heat dissipation fins 23. The protrusions 137 may cause the heat dissipation fins 23 to be temporarily fixed in position, thereby preventing the heat dissipation fins 23 from deviating from desired positions.

Furthermore, in the exemplary embodiment shown in FIGS. 3 and 4, thermally conductive adhesive layers 17 may be in direct contact with upper ends and lower ends of the battery cells 21, causing heat emitted from the upper ends and the lower ends of the battery cells 21 to be transferred to the cooling channel integrated plates 13. Accordingly, an improved cooling effect may be achieved.

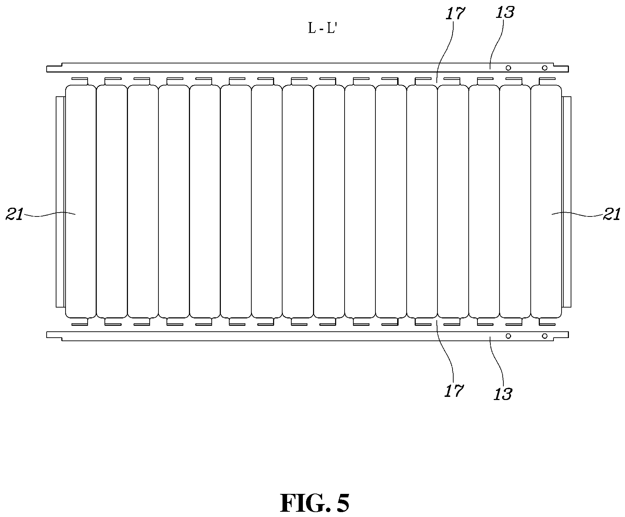

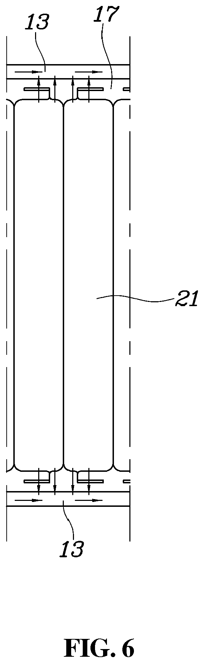

FIG. 5 is a cross-sectional view showing a battery module according to another exemplary embodiment of the present invention taken along line L-L' of FIG. 2, and FIG. 6 is an enlarged view showing a portion of the cross-sectional view shown in FIG. 5. In the exemplary embodiment shown in FIGS. 5 and 6, provision of the heat dissipation fins 23 in the exemplary embodiment shown in FIGS. 3 and 4 described above is omitted. As shown in FIGS. 5 and 6, though the battery module according to the exemplary embodiment of the present invention is not provided with the heat dissipation fins, thermally conductive adhesive layers 17 may be in direct contact with upper ends and lower ends of battery cells 21, causing heat emitted from the upper ends and the lower ends of the battery cells 21 to be transferred to cooling channel integrated plates 13 and discharged externally.

The exemplary embodiment shown in FIGS. 5 and 6 differs from the exemplary embodiment shown in FIGS. 3 and 4 in that heat transfer by the heat dissipation fins 23 is omitted and thus relative cooling effect may be reduced. However, this configuration allows the number of components to be reduced, resulting in a reduction in size of the battery module and a reduction in manufacturing costs thereof.

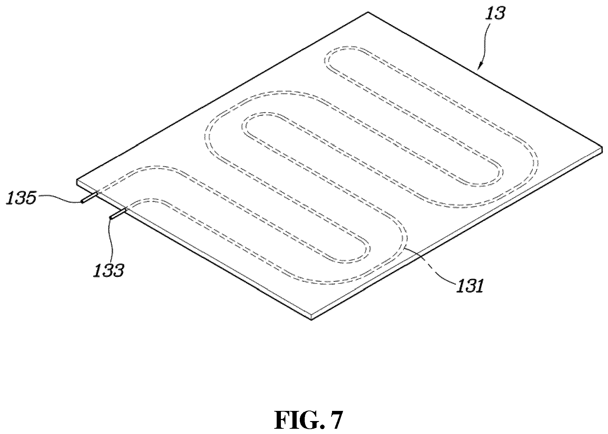

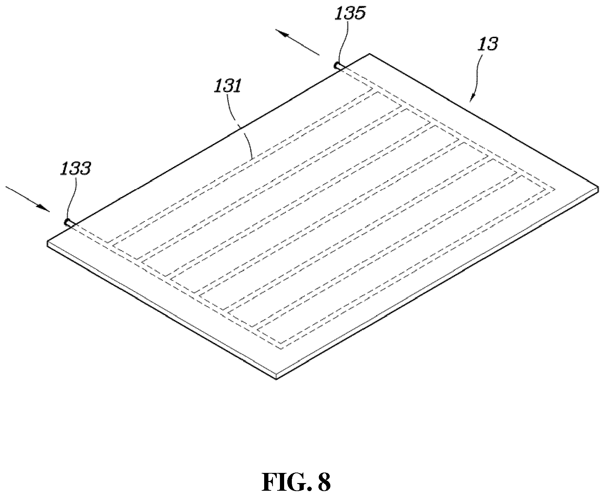

FIGS. 7 and 8 are views showing examples of the cooling passage formed in the cooling channel integrated plate of the battery module according to various exemplary embodiments of the present invention. As described above, the cooling passage 131 formed in the cooling channel integrated plate 13 of the battery module according to various exemplary embodiments of the present invention may vary in configuration as required. FIG. 7 shows an example in which a cooling passage 131 having a serpentine configuration is formed such that one battery cell and the cooling passage 131 intersect at various points along the direction in which the battery cells 21 are stacked. Furthermore, FIG. 8 shows an example in which multiple cooling passages 131 are formed in parallel with each other in a longitudinal direction of the battery cells 21 (e.g., in a direction perpendicular to a stacking direction thereof). As described above, in various exemplary embodiments of the present invention, formation of the cooling passage 131 of various desired shapes may be possible by applying the combi-core technique.

Although an exemplary embodiment of the present invention has been described for illustrative purposes, those skilled in the art will appreciate that various modifications, additions and substitutions are possible, without departing from the scope and spirit of the invention as disclosed in the accompanying claims.

## Claims

1. A battery module, comprising:
a cell assembly having a plurality of battery cells stacked on top of each other in one direction;
a cooling channel integrated plate positioned to face the cell assembly in a direction perpendicular to the direction in which the battery cells are stacked, wherein the cooling channel integrated plate includes a cooling passage formed therein and through which cooling water flows; and
a thermally conductive adhesive layer that adheres the cell assembly and the cooling channel integrated plate to each other.

2. The battery module of claim 1, wherein the cooling channel integrated plate is made of a metal material and has a single structure in which no empty space is present except for a region where the cooling passage is formed.

3. The battery module of claim 1 or 2, wherein the cooling channel integrated plate is manufactured by casting in which a metal pipe filled with filler is disposed at a predetermined position in a mold, and a metal of the same material as the metal pipe is used when the metal pipe is disposed in the mold.

4. The battery module of any one of claims 1 to 3, further comprising:
a plurality of heat dissipation fins arranged between the multiple battery cells,
wherein each heat dissipation fin includes a first portion in surface contact with adjacent battery cells and a second portion disposed at each end of the first portion, and
wherein the second portion is in surface contact with the cooling channel integrated plate.

5. The battery module of claim 4, wherein the cooling channel integrated plate includes:
protrusions that extend from on a surface of the cooling channel integrated plate to be arranged between the second portions of the plurality of heat dissipation fins,
wherein the surface of the cooling channel integrated plate is in contact with the second portions of the plurality of heat dissipation fins.

6. The battery module of any one of claims 1 to 5, further comprising:
end plates positioned on outer surfaces of the outermost battery cells of the cell assembly, respectively, and applying a surface pressure to an interior of the cell assembly,
wherein the end plates are joined to the cooling channel integrated plate.

7. The battery module of any one of claims 1 to 6, wherein the thermally conductive adhesive layer is in direct contact with ends of the plurality of battery cells and with the cooling channel integrated plate.

8. A vehicle comprising a battery module of any one of claims 1 to 7.
